(19) Europäisches Patentamt / European Patent Office / Office européen des brevets

(11) **EP 4 607 826 A2**

(12) **EUROPEAN PATENT APPLICATION**

(43) Date of publication:
**27.08.2025 Bulletin 2025/35**

(21) Application number: **25155426.7**

(22) Date of filing: **31.01.2025**

(51) International Patent Classification (IPC):
**H04J 11/00** (2006.01)     **H04L 1/1812** (2023.01)
**H04B 7/185** (2006.01)

(52) Cooperative Patent Classification (CPC):
**H04J 11/005; H04B 7/1853; H04J 11/0056;
H04L 1/1812**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **05.02.2024 KR 20240017541
17.07.2024 KR 20240094608**

(71) Applicant: **Samsung Electronics Co., Ltd.
Suwon-si, Gyeonggi-do 16677 (KR)**

(72) Inventors:
• **OH, Jinwoo**
  **16677 Suwon-si (KR)**
• **KIM, Jinho**
  **16677 Suwon-si (KR)**
• **PARK, Jungmin**
  **16677 Suwon-si (KR)**

(74) Representative: **Marks & Clerk LLP
15 Fetter Lane
London EC4A 1BW (GB)**

(54) **METHOD AND DEVICE FOR MITIGATING INTER-CELL INTERFERENCE IN WIRELESS COMMUNICATION SYSTEM**

(57)     Provided is a method of operating an electronic device, the method including receiving data blank information from a serving cell, identifying at least one first subframe and at least one second subframe based on a timing offset and the data blank information, resource allocations between the serving cell and an interference cell overlapping in the at least one first subframe, and the resource allocations not overlapping in the at least one second subframe, increasing a first weight for a first log likelihood ratio (LLR) corresponding to the at least one first subframe, decreasing a second weight for a second LLR corresponding to the at least one second subframe, and calculating a third LLR based on the first LLR and the second LLR.

FIG. 7

EP 4 607 826 A2

**Description**

BACKGROUND

The inventive concepts relate to a wireless communication system, and more particularly, to a method and a device for mitigating inter-cell interference in the wireless communication system.

As a next-generation mobile communication system, satellite communication systems are being researched and developed to overcome the coverage limitations of existing terrestrial networks. The satellite communication systems are expected to provide lower-capacity data, voice, and video streaming services to users through satellite in areas in which services provision through existing terrestrial networks is difficult.

Although satellite communication systems may provide wider coverage, satellite communication systems are vulnerable to interference signals due to their weaker signal strengths. In particular, when a terrestrial network (TN) cell and a non-terrestrial network (NTN) cell (e.g., the cell of the a satellite communication system) overlap, more interference between the NTN cell and TN cell may occur because the coverage of the NTN cell is greater than that of the TN cell.

To address this challenge, various interference cancellation techniques may be considered, including an inter-cell interference coordination (ICIC) technique, an enhanced ICIC (eICIC) technique, and a further eICIC (FeICIC) technique to reduce the inter-cell interference in existing standards. However, considering that the propagation delays of the TN cell and the NTN cell are different, it is difficult for a satellite corresponding to the NTN cell to synchronize timing because the satellite is constantly moving, and the system bandwidths of the TN cell and the NTN cell are different. Accordingly, application of the various interference cancellation techniques described above is difficult.

SUMMARY

The inventive concepts provide a method and a device for mitigating inter-cell interference based on data blank information and cell specific reference signal (CRS) blank information of a neighboring cell.

According to an aspect of the inventive concepts, there is provided a method of operating an electronic device, the method including receiving data blank information from a serving cell, identifying at least one first subframe and at least one second subframe based on a timing offset and the data blank information, resource allocations between the serving cell and an interference cell overlapping in the at least one first subframe, and the resource allocations not overlapping in the at least one second subframe, increasing a first weight for a first log likelihood ratio (LLR) corresponding to the at least one first subframe, decreasing a second weight for a second LLR corresponding to the at least one second subframe, and calculating a third LLR based on the first LLR and the second LLR. The timing offset or timing difference may be determined. The timing offset or timing difference may be determined by the serving cell. The method may be performed by a user equipment (UE). Overlapping may comprise occurring in the same time and/or frequency domains. Nonoverlapping may comprise occurring in different time and/or frequency domains.

According to an aspect of the inventive concepts, there is provided a method of operating an electronic device, the method including transmitting user equipment (UE) capability information to a serving cell, receiving cell specific reference signal (CRS) blank information for an interference cell from the serving cell, detecting a timing difference between the serving cell and the interference cell, identifying a CRS blank subframe based on the timing difference and the CRS blank information, and mitigating interference based on the CRS blank subframe. The method may detect a timing difference or offset. The method may be performed by a UE.

According to an aspect of the inventive concepts, there is provided an electronic device including processing circuitry configured to transmit user equipment (UE) capability information to a serving cell, receive cell specific reference signal (CRS) blank information for an interference cell from the serving cell, detect a timing difference between the serving cell and the interference cell, identify a CRS blank subframe based on the timing difference and the CRS blank information, and mitigate interference based on the CRS blank subframe. The processing circuitry may be configured to detect a timing difference or timing offset. The electronic device may comprise a UE.

At least some of the above and other features of the disclosure are set out in the claims.

BRIEF DESCRIPTION OF THE DRAWINGS

Embodiments will be more clearly understood from the following detailed description taken in conjunction with the accompanying drawings in which:

FIG. 1A shows a wireless communication system in which inter-cell interference occurs, according to embodiments;
FIG. 1B shows a wireless communication system in which inter-cell interference occurs, according to embodiments;
FIG. 2 is a block diagram of a base station according to embodiments;
FIG. 3 is a block diagram of an electronic device according to embodiments;

FIG. 4 shows scheduling of a serving cell and a neighboring cell according to a comparative example;

FIG. 5 is a flowchart of a method of operating a serving cell according to embodiments;

FIG. 6A shows resource allocation in an operation to perform scheduling, according to embodiments;

FIG. 6B shows resource allocation in an operation to perform scheduling, according to embodiments;

FIG. 7 is a flowchart of a method of operating an electronic device, according to embodiments;

FIG. 8 is a flowchart of a method of operating a serving cell, according to embodiments;

FIG. 9 is a flowchart of a method of operating the electronic device, according to embodiments;

FIG. 10 shows scheduling of a serving cell and a neighboring cell, according to embodiments; and

FIG. 11 is a block diagram of a wireless communication device according to embodiments.

## DETAILED DESCRIPTION

Hereinafter, embodiments are described in detail with reference to the attached drawings.

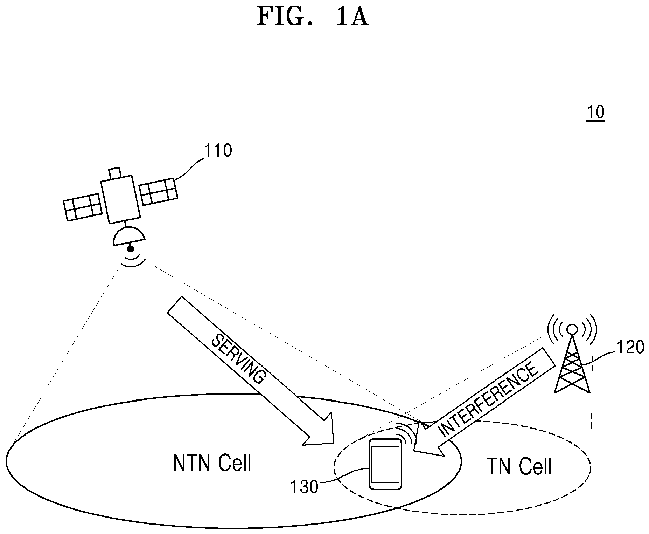

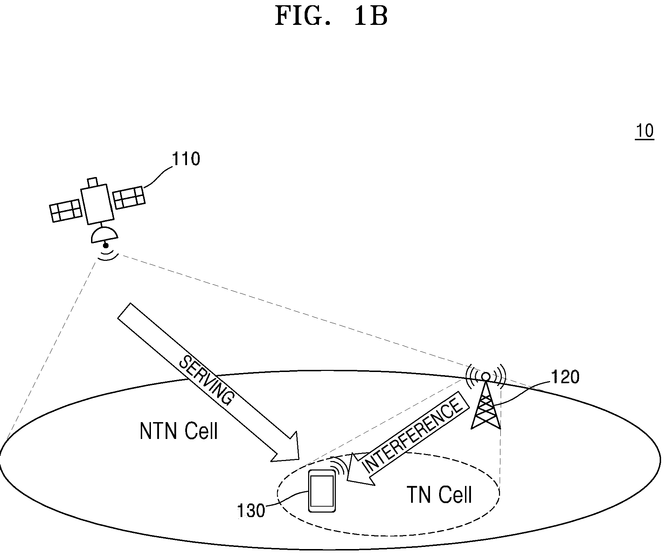

FIGS. 1A and 1B each show a wireless communication system in which inter-cell interference occurs, according to embodiments.

Referring to FIG. 1A, a wireless communication system 10 may include a serving cell 110, a neighboring cell 120, and/or an electronic device 130.

According to embodiments, the serving cell 110 and the neighboring cell 120 are network infrastructure that provide wireless access to the electronic device 130. The serving cell 110 and the neighboring cell 120 may each have a coverage defined as a certain geographic area based on the distance at which signals are transmittable. For example, the coverage of the serving cell 110 which corresponds to a non-terrestrial network (NTN) cell may be much greater than the coverage of the neighboring cell 120 which corresponds to a terrestrial network (TN) cell. The serving cell 110 and/or the neighboring cell 120 may be replaced with (e.g., implemented using) an access point (AP), eNodeB (eNB), 5th generation (5G) node, a wireless point, or other terms with equivalent technical meaning, in addition to a base station.

According to embodiments, the serving cell 110 may correspond to the NTN cell providing an NTN. For example, the serving cell 110 may include a communications satellite. The communication satellite may include a geostationary orbit (GEO) satellite or a low earth orbit (LEO) satellite. The GEO satellite remains at a fixed position in altitude and direction with respect to a location (e.g., a random location) on Earth at an altitude of about 35000 Km. Accordingly, in case of the GEO satellite, the electronic device 130 may view the GEO satellite floating at the fixed location at all times. The LEO satellite rotates around the Earth at an altitude of about 300 Km to about 1500 Km. Accordingly, in case of the LEO satellite, the electronic device 130 may communicate with the LEO satellite only for a certain period of time corresponding to the line of sight (LoS).

The neighboring cell 120 may correspond to the TN cell providing a TN. For example, the neighboring cell 120 may correspond to a base station device at a fixed location on the ground. The neighboring cell 120 may transmit a wireless signal to the electronic device 130 located at the coverage edge of the neighboring cell 120. For example, the neighboring cell 120 may transmit a reference signal, including a cell specific reference signal (CRS), a channel state information-reference signal (CSI-RS), and/or a demodulation reference signal (DMRS), and/or a downlink signal (e.g., a physical downlink shared channel (PDSCH)) including user data to the electronic device 130.

According to embodiments, the electronic device 130 which is used by a user may communicate with the serving cell 110 through a wireless channel and receive a wireless signal (e.g., PDSCH channel, reference signal, etc.) from the neighboring cell 120. The electronic device 130 may be replaced with (e.g., implemented using) user equipment (UE), a mobile station, a subscriber station, customer premises equipment (CPE), a remote terminal, a wireless terminal, a user device, or other terms with equivalent technical meaning, in addition to a terminal.

According to embodiments, the electronic device 130 may not only be located within the coverage of the serving cell 110 but may also be located within the coverage of the neighboring cell 120 at the same time (or contemporaneously). For example, referring to FIG. 1A, the electronic device 130 may be located at a location where the coverage edge of the serving cell 110 and the coverage edge of the neighboring cell 120 overlap. In this case, inter-cell interference may occur between the serving cell 110 and the neighboring cell 120. For another example, referring to FIG. 1B, although the electronic device 130 is not located at the coverage edge of the serving cell 110, the electronic device 130 may be located within the coverage of the serving cell 110 and at the coverage edge of the neighboring cell 120 at the same time (or contemporaneously). This is because the coverage of the neighboring cell 120 may be included (e.g., entirely included) in the coverage of the serving cell 110 as the serving cell 110 transmits signals at a higher altitude via satellite and has a larger coverage size.

In the above-described examples, the serving cell 110 is shown as a communication satellite corresponding to the NTN cell and the neighboring cell 120 is shown as a base station device corresponding to the TN cell but the inventive concepts are not limited thereto. According to embodiments, the inventive concepts may include all examples in which interference occurs when the electronic device 130 simultaneously (or contemporaneously) receives signals from the NTN cell and the TN cell. For example, the serving cell 110 may correspond to the TN cell and the neighboring cell 120 may correspond to the NTN cell.

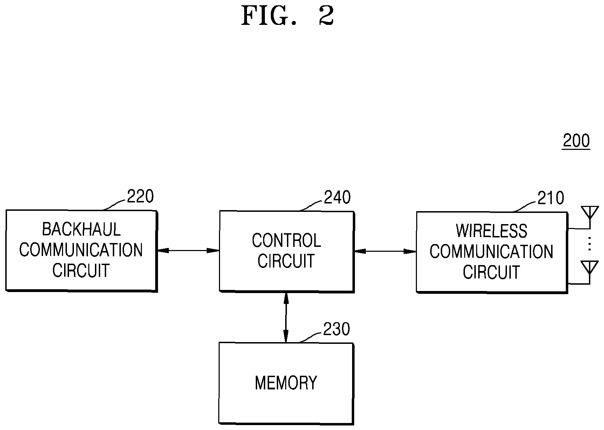

FIG. 2 is a block diagram of a base station 200 according to embodiments.

According to embodiments, the base station 200 may correspond to the serving cell 110 or the neighboring cell 120, shown in FIGS. 1A and 1B. Referring to FIG. 2, the base station 200 may include a wireless communication circuit 210, a backhaul communication circuit 220, memory 230, and/or a control circuit 240.

The wireless communication circuit 210 may perform functions for transmitting and receiving signals through a wireless channel. According to embodiments, the wireless communication circuit 210 may perform a conversion function between a baseband signal and a bit string according to the physical layer specifications of the system. For example, when transmitting data, the wireless communication circuit 210 may generate complex symbols by encoding and modulating the transmitted bit string, and when receiving data, the wireless communication circuit 210 may restore the received bit string by demodulating and decoding the baseband signal. In addition, the wireless communication circuit 210 may up-convert the baseband signal into a radio frequency (RF) band signal and transmit the same through an antenna or may down-convert the RF band signal received through an antenna into the baseband signal. To this end, the wireless communication circuit 210 may include a transmission filter, a reception filter, an amplifier, a mixer, an oscillator, a digital to analog converter (DAC), and/or an analog to digital converter (ADC).

The wireless communication circuit 210 may transmit and receive signals. For example, the wireless communication circuit 210 may transmit a synchronization signal, a reference signal, system information, a message, control information, and/or data. In addition, the wireless communication circuit 210 may perform beamforming. To provide directionality to signals to be transmitted and received, the wireless communication circuit 210 may apply a beamforming weight to the signals. The wireless communication circuit 210 may transmit signals repeatedly by changing the formed beam.

The backhaul communication circuit 220 provides an interface for communicating with other nodes in the network. That is, the backhaul communication circuit 220 may convert the bit string transmitted from the base station 200 to another node, for example, another access node, another base station, an upper node, and/or a core network, into a physical signal and may convert the physical signal received from another node into a bit string. According to embodiments, data blank information and/or CRS blank information may be given to or shared with the backhaul communication circuit 220 by the neighboring cell (e.g., TN cell).

The memory 230 stores data, such as basic programs, applications, and/or setting information for operations of the base station 200. The memory 230 may include volatile memory, non-volatile memory, or a combination of the volatile memory and the non-volatile memory. For example, the memory 230 may store the data blank information and/or the CRS blank information shared by the neighboring cell (e.g., TN cell).

The control circuit 240 may control the operations of the base station 200. To this end, the control circuit 240 may include at least one processor. The control circuit 240 may control the wireless communication circuit 210 and/or the backhaul communication circuit 220 to transmit and receive signals. For example, the control circuit 240 may receive the data blank information and/or the CRS blank information of the neighboring cell through the backhaul communication circuit 220 and may transmit the data blank information and/or the CRS blank information of the base station 200 to the neighboring cell (e.g., TN cell). For another example, the control circuit 240 exchanges a data signal and/or a reference signal with a terminal (e.g., electronic device 130) through the wireless communication circuit 210. In addition, the control circuit 240 may read and write data into the memory 230. For example, the control circuit 240 may store the data blank information and/or the CRS blank information shared by or received from the neighboring cell (e.g., TN cell) in the memory 230. In addition, the control circuit 240 may perform scheduling for transmitting and receiving signals. For example, the control circuit 240 may schedule resources based on the data blank information shared by or received from the neighboring cell (e.g., TN cell) so that the downlink signal (e.g., PDSCH) to be transmitted to the electronic device 130 does not overlap with the signal of the neighboring cell in time and frequency domains. For another example, the control circuit 240 may schedule resources based on the CRS blank information shared by or received from the neighboring cell (e.g., TN cell) so that the reference signal (e.g., CRS, CSI-RS, and/or DMRS) to be transmitted to the electronic device 130 does not overlap with the signal of the neighboring cell in time and frequency domains.

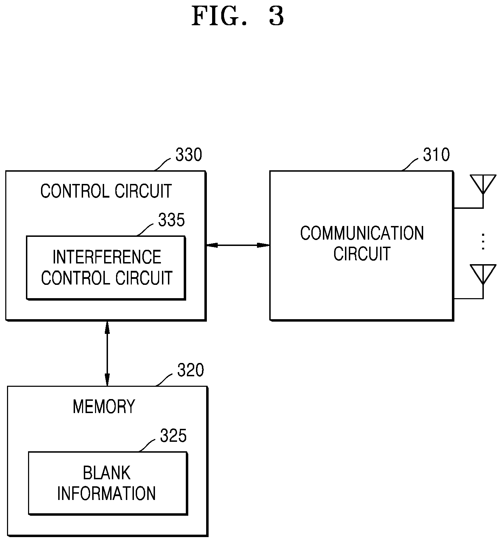

FIG. 3 is a block diagram of an electronic device 300 according to embodiments.

The electronic device 300 of FIG. 3 may correspond to the electronic device 130 of FIGS. 1A and 1B. Referring to FIG. 3, the electronic device 300 may include a communication circuit 310, memory 320, and/or a control circuit 330.

The communication circuit 310 performs functions for transmitting and receiving signals through a wireless channel. For example, the communication circuit 310 performs a conversion function between the baseband signal and the bit string according to the physical layer specifications of the system. For example, when transmitting data, the communication circuit 310 may generate complex symbols by encoding and modulating the transmitted bit string, and when receiving data, the communication circuit 310 may restore the received bit string by demodulating and decoding the baseband signal. In addition, the communication circuit 310 may up-convert the baseband signal into an RF band signal and transmit the same through an antenna or may down-convert the RF band signal received through an antenna into the baseband signal. For example, the communication circuit 310 may include a transmission filter, a reception filter, an amplifier, a mixer, an oscillator, a DAC, and/or an ADC. The communication circuit 310 may perform beamforming. To provide directionality to signals to be transmitted and received, the communication circuit 310 may apply a beamforming weight to the signals.

The communication circuit 310 may transmit and receive the signals. The communication circuit 310 may receive a downlink signal. The downlink signal may include a synchronization signal (SS), a reference signal (RS), system information, a configuration message, control information, and/or downlink data. In addition, the communication circuit 310 may transmit an uplink signal. The uplink signal may include a random access-related signal and/or a reference signal (e.g., sounding reference signal (SRS), and/or DMRS), and/or uplink data.

The memory 320 may store data, such as basic programs, applications, and/or setting information, for the operations of the electronic device 300. The memory 320 may include volatile memory, non-volatile memory, or a combination of the volatile memory and the non-volatile memory. In addition, the memory 320 may provide the stored data according to the request of the control circuit 330. For example, the memory 320 may store data blank information and/or CRS blank information of the neighboring cell (e.g., NTcell) signaled through radio resource control (RRC) from the serving cell (e.g., TNT cell).

According to embodiments, the memory 320 may further include blank information 325. The blank information 325 may include information stored by receiving signaling from the serving cell (e.g., TNTcell) through RRC. For example, the blank information 325 may include data blank information and/or CRS blank information of the neighboring cell (e.g., TN cell) that causes inter-cell interference with respect to the serving cell. The data blank information may refer to information about an area of the downlink signal (e.g., PDSCH) transmitted by the neighboring cell, to which no resources are allocated. The CRS blank information may refer to information about an area of the reference signal transmitted by the neighboring cell, to which no resources are allocated. According to embodiments, the electronic device 300 may calculate an improved log likelihood ratio (LLR) based on the data blank information and the CRS blank information. The calculation of the improved LLR may be described below. According to embodiments, the area of the downlink signal and/or reference signal may refer to time resources (e.g., slots) and/or frequency resources (e.g., subcarriers) of the downlink signal and/or reference signal.

The control circuit 330 may control the operations of the electronic device 300. For example, the control circuit 330 may transmit and receive signals through the communication circuit 310. In addition, the control circuit 330 may read and write data into the memory 320. To this end, the control circuit 330 may include at least one processor or a microprocessor or may be a part of the processor. When the control circuit 330 is a part of the processor, a part of the communication circuit 310 and the control circuit 330 may be referred to as a communication processor (CP).

According to embodiments, the control circuit 330 may further include an interference control circuit 335. The interference control circuit 335 may perform overall operations to eliminate (or reduce) interference. For example, when the CRS blank information is not signaled from the serving cell (e.g., TNT cell), the interference control circuit 335 may perform CRS channel estimation of the neighboring cell to determine whether there is a CRS transmitted from the neighboring cell (e.g., TN cell) causing interference. For another example, when the symbol boundaries of the serving cell and the neighboring cell are not synchronized, the interference control circuit 335 may perform data-aided interference whitening (DA-IW) to determine whether there is a CRS transmitted to the neighboring cell (e.g., TN cell). For the other example, the interference control circuit 335 may perform LLR scaling. The LLR scaling may refer to calculating an improved LLR by giving a higher weight to the LLR detected in an area where downlink signals or CRS do not overlap between the neighboring cell and the serving cell and giving a lower weight to the LLR detected in an area where downlink signals or CRS overlap between the neighboring cell and the serving cell. The electronic device 300 may improve the decoding ability through hybrid automatic repeat request (HARQ) combining based on the improved LLR.

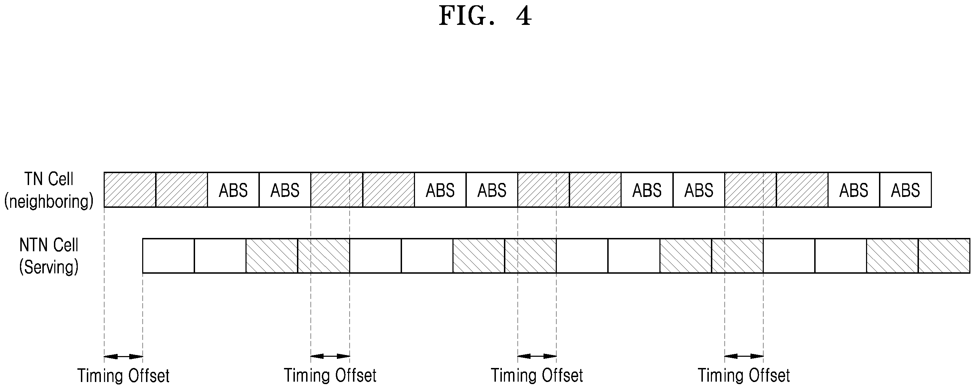

FIG. 4 shows scheduling of a serving cell and a neighboring cell according to a comparative example.

Referring to FIG. 4, the serving cell and the neighboring cell may transmit signals simultaneously (or contemporaneously). According to embodiments, the serving cell may correspond to the NTN cell and the neighboring cell may correspond to the TN cell.

To mitigate inter-cell interference, the neighboring cell may share an almost blank subframe (ABS) pattern with the serving cell based on eICIC and may not allocate resources (e.g., radio frequency (RF) resources and/or RF energy) to subframes corresponding to the ABS pattern. For example, referring to FIG. 4, the neighboring cell may allocate resources to two subframes but may not allocate resources to the two following subframes. In the neighboring cell, two subframes to which resources are allocated and two subframes corresponding to the ABS pattern may be alternately repeated.

The serving cell may receive information about the ABS pattern from the neighboring cell and allocate resources only to subframes corresponding to the ABS pattern. For example, based on the ABS pattern, the serving cell may identify whether the neighboring cell has allocated resources to the first and second subframes and whether the neighboring cell has not allocated resources to the third and fourth subframes. The serving cell may not allocate resources to the first and second subframes to which resources are allocated by the neighboring cell. The serving cell may allocate resources for downlink to the third and fourth subframes to which resources are not allocated by the neighboring cell. Since the remaining subframes starting from the fifth subframe repeat the pattern of the first to fourth subframes, the description thereof is omitted.

According to embodiments, there may be a timing offset between the serving cell and the neighboring cell. The timing offset may be caused by differences in propagation delay between the NTN cell and the TN cell, and/or difficulties in synchronization since the TN cell is in a fixed location while the NTN cell continuously moves. For example, the first subframe of the serving cell may be transmitted with a timing offset delay compared to the first subframe of the neighboring cell. However, when there is a timing offset, the effect of avoiding (or reducing) interference by allocating resources at different times based on the ABS pattern may be minimal (or small). For example, even when there is a timing offset, the third subframe of the serving cell spans the third and fourth subframes of the neighboring cell, resulting in the effect of avoiding (or reducing) interference. However, the fourth subframe of the serving cell spans the fourth and fifth subframes of the neighboring cell, thereby causing interference between the neighboring cell and the serving cell.

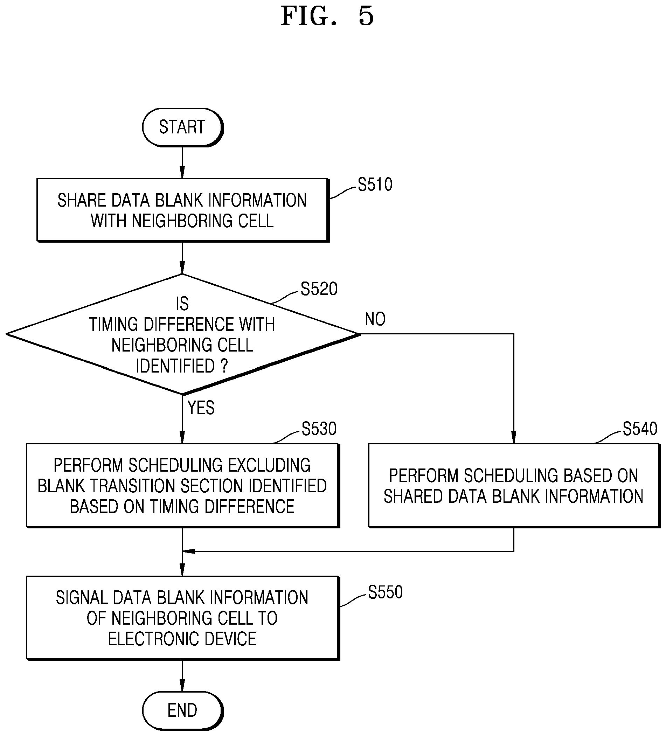

FIG. 5 is a flowchart of a method of operating the serving cell 110 according to embodiments.

Referring to FIG. 5, in operation S510, the serving cell 110 may share the data blank information with the neighboring cell 120. The data blank information may refer to information about an area to which the neighboring cell 120 has not allocated resources for transmitting user data. According to embodiments, the serving cell 110 and the neighboring cell 120 may share the data blank information through the backhaul communication circuit 220 in FIG. 2. For example, the data blank information may include frequency domain information and/or time domain information, and may be as shown in Table 1 below.

[Table 1]

```
Data-Blanking ::= SEQUENCE
{
  FR-Pattern Data-BlankPattern OPTIONAL
  StartRB INTEGER (0..100)
  LengthRB INTEGER (0..100)
},

Data-BlankPattern ::= CHOICE {
              FR-Bitmap5 BIT STRING (SIZE(5))
              FR-Bitmap10 BIT STRING (SIZE(10))
              FR-Bitmap20 BIT STRING (SIZE(20))
              FR-Bitmap40 BIT STRING (SIZE(40))
              FR-Bitmap80 BIT STRING (SIZE(80))
},
```

According to embodiments, the frequency domain information may include information about the location of the starting resource block (RB) in the frequency domain and the length of the RB in the frequency domain for a blank area (e.g., subcarriers) to which no resources are allocated. The data blank information includes the frequency domain information because it is inefficient to blank the entire RB area with the ABS subframe as shown in FIG. 4 as the system bandwidths of the TN cell and the NTN cell may be different. For example, when TN cell serves 100 RBs and the NTN cell serves only 6 RBs, it may be more efficient in terms of resource utilization for the TN cell to blank only 6 RBs that overlap with the NTN cell.

According to embodiments, the time domain information may include information about a subframe burst in the time domain for a blank area to which no resources are allocated. The subframe burst may include one frame including 10 subframes but is not limited thereto. According to embodiments, the subframe burst may be shorter than one frame or longer than one frame. For example, the subframe burst may have 5 subframes as a burst unit or may have 2, 4, or 5 frames instead of 1 frame as a burst unit. In addition, the burst unit is not limited to the above-described number of subframes or frames and may include various numbers of subframes or frames. According to embodiments, resource allocations and scheduled resources as discussed herein may refer to time resources (e.g., slots) and/or frequency resources (e.g., subcarriers) over which a signal (e.g., a communication signal) may be transmitted. According to embodiments, overlap between resource allocations may refer to signal transmissions by the serving cell 110 and the neighboring cell 120 over the same (or similar) time and/or frequency resources, resulting in interference between the signal transmissions.

In operation S520, the serving cell 110 may determine whether a timing difference or timing offset with the neighboring cell 120 has been identified. For example, the serving cell 110 may share not only the data blank information but also information about transmission timing with the neighboring cell 120. When the serving cell 110 has the information about the transmission timing of the neighboring cell 120, the serving cell 110 may determine, based thereon, whether there is a timing difference or timing offset with the subframe that the serving cell 110 will transmit to the electronic device 130.

In operation S530, the serving cell 110 may perform scheduling excluding a blank transition section identified based on the timing difference. When the timing difference with the neighboring cell 120 is identified in operation S520, the serving cell 110 may identify the blank transition section. The blank transition section may refer to a section where the resource allocations of the serving cell 110 and the neighboring cell 120 overlap because of the timing difference even though the serving cell 110 has allocated resources to a subframe to which the neighboring cell 120 has not allocated resources. For example, the resource allocations may overlap in the last subframe of the subframe burst due to the timing difference of a certain size even though resources are allocated not to cause the serving cell 110 and the neighboring cell 120 to overlap. The serving cell 110 may calculate the blank transition section using the identified timing difference and may prevent (or reduce) inter-cell interference in advance by allocating resources excluding subframes corresponding to the blank transition section.

In operation S540, the serving cell 110 may perform scheduling based on the shared data blank information. Although the serving cell 110 was unable to identify a timing difference with the neighboring cell 120 in operation S520, the serving cell 110 may perform scheduling to allocate resources to subframes to which the neighboring cell 120 does not allocate resources based on the data blank information of the neighboring cell 120. For example, when the transmission timings of the neighboring cell 120 and the serving cell 110 are the same (or similar), resources may be allocated at different times, thereby preventing (or reducing) interference in advance. For another example, even when the transmission timings of the neighboring cell 120 and the serving cell 110 are different, inter-cell interference occurs only in some subframes in the second half of the subframe burst. In this case, compared to the case where inter-cell interference occurs in every subframe of a certain section as in the case of following the conventional ABS pattern, the number of times interference (e.g., the number of subframes in which inter-cell interference occurs) may be reduced, thereby mitigating the inter-cell interference. According to embodiments, scheduling to allocate resources to subframes to which the neighboring cell 120 does not allocate resources may include scheduling, by the serving cell 110, a transmission to use time and/or frequency resources different from those used by the neighboring cell 120 in order to prevent or reduce interference between the signal transmissions.

In operation S550, the serving cell 110 may signal the data blank information of the neighboring cell 120 to the electronic device 130. For example, the serving cell 110 may provide the data blank information to the electronic device 130 through RRC signaling and may provide the data blank information to the electronic device 130 through a media access control-control element (MAC-CE) or downlink control information (DCI). The data blank information provided by the serving cell 110 to the electronic device 130 may be as shown in Table 2 below.

[Table 2]

```
RadioResourceConfigDedicated ::=        SEQUENCE {
    srb-ToAddModList                    SRB-ToAddModList         OPTIONAL,    --
Cond HO-Conn
    drb-ToAddModList                    DRB-ToAddModList         OPTIONAL,    --
Cond HO-toEUTRA
    drb-ToReleaseList                   DRB-ToReleaseList        OPTIONAL,    --
Need ON

...

NeighCellsDataBlank-Info ::= CHOICE {
  release NULL
  setup Data-BlankInfoList


Data-BlankInfoList ::= SEQUENCE (SIZE (1..maxData-Blank))OF Data-BlankInfo

Data-BlankInfo ::= SEQUENCE
{
  FR-Pattern Data-BlankPattern
  StartRB INTEGER (0..100)
  LengthRB INTEGER (0..100)
},

Data-BlankPattern ::= CHOICE {
                    FR-Bitmap5 BIT STRING (SIZE(5))
                    FR-Bitmap10 BIT STRING (SIZE(10))
                    FR-Bitmap20 BIT STRING (SIZE(20))
                    FR-Bitmap40 BIT STRING (SIZE(40))
                    FR-Bitmap80 BIT STRING (SIZE(80))

}

...
```

According to embodiments, the electronic device 130 may calculate an improved LLR based on the data blank information, which is described below.

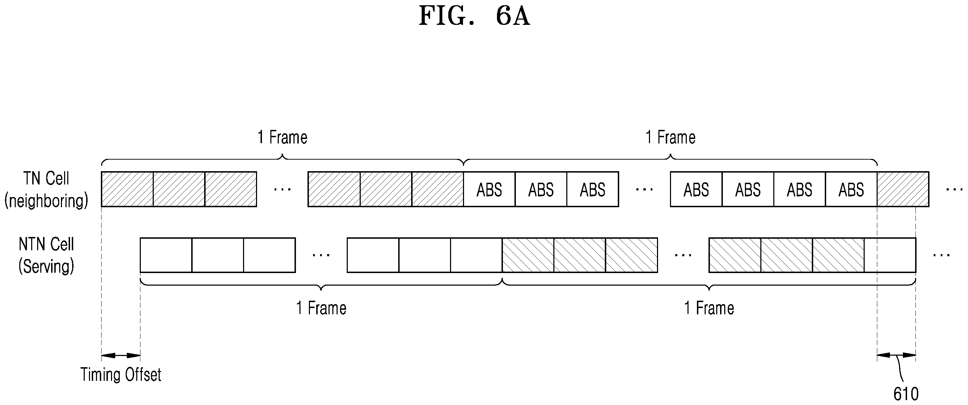

FIG. 6A shows resource allocation in operation S540 according to embodiments.

Referring to FIG. 6A, the transmission timing of the serving cell 110 and the transmission timing of the neighboring cell 120 may be different. For example, the serving cell 110 may start transmitting later than the neighboring cell 120 by a timing offset or timing difference.

The neighboring cell 120 may provide data blank information to the serving cell 110, wherein the data blank information may include time domain information indicating that the subframe burst is one frame in FIG. 6A. In addition, although not shown, the data blank information may further include frequency domain information including the starting RB and the RB length when the frequency bandwidths are different.

According to embodiments, the serving cell 110 may not identify the timing difference with neighboring cell 120 and may perform scheduling so that resource allocation of the serving cell 110 does not overlap with that of the neighboring cell 120 according to the data blank information of the neighboring cell 120. Accordingly, the serving cell 110 may not allocate resources to the first frame (the initial 10 subframes) but allocate resources to the second frame (the next 10 subframes). If there were no timing difference between the neighboring cell 120 and the serving cell 110, resource allocations of the neighboring cell 120 and the serving cell 110 may not overlap. In this example, since there is a timing offset, the electronic device 130 may sense inter-cell interference in a section 610. However, compared to FIG. 4 in which the resource allocations overlap every two subframes, causing inter-cell interference, according to the conventional ABS pattern, the inter-cell interference occurs only to the extent of the timing difference in the last subframe of the subframe burst when using a data blank based on the subframe burst. In other words, the time and frequency at which resource allocations overlap are reduced, thereby mitigating the inter-cell interference.

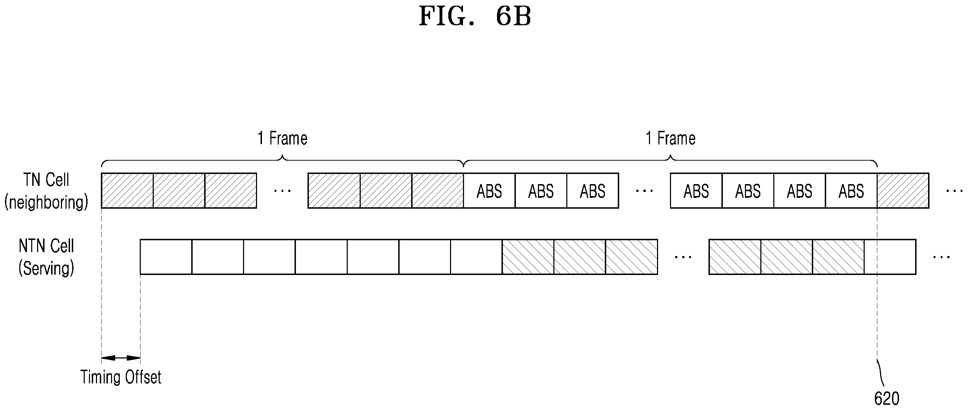

FIG. 6B shows resource allocation in operation S530 according to embodiments.

Referring to FIG. 6B, the transmission timing of the serving cell 110 and the transmission timing of the neighboring cell 120 may be different. For example, the serving cell 110 may start transmitting later than the neighboring cell 120 by a timing offset or timing difference.

The neighboring cell 120 may provide data blank information to the serving cell 110, wherein the data blank information may include time domain information indicating that the subframe burst is one frame in FIG. 6B. In addition, although not shown, the data blank information may further include frequency domain information including the starting RB and the RB length when the frequency bandwidths are different.

According to embodiments, since the serving cell 110 has identified the timing difference with the neighboring cell 120, a blank transition section 620 may be identified. For example, although scheduling is performed so that the resource allocation of the serving cell 110 does not overlap with that of the neighboring cell 120 according to the data blank information of the neighboring cell 120, the serving cell 110 may calculate that the resource allocation of the serving cell 110 will overlap with that of the neighboring cell 120 in the last subframe of the subframe burst. Accordingly, the serving cell 110 may allocate resources to the second frame (next 10 subframes) but may not allocate resources to the last subframe corresponding to the blank transition section 620 to avoid (or reduce) inter-cell interference.

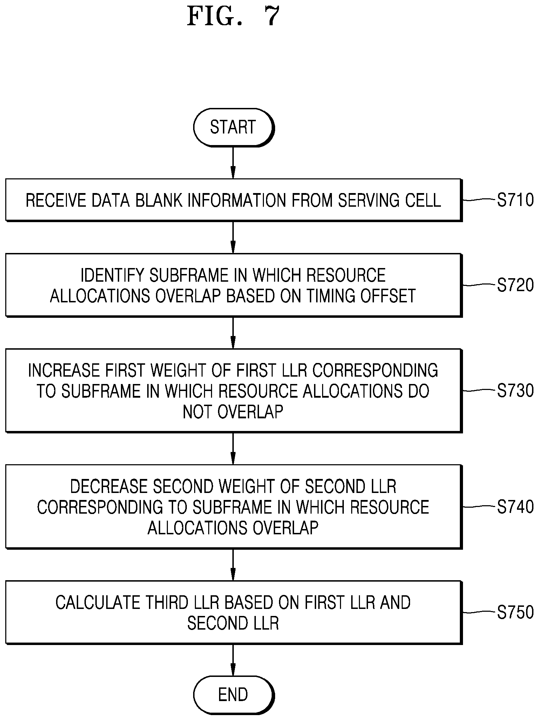

FIG. 7 is a flowchart of a method of operating the electronic device 130 according to embodiments.

Referring to FIG. 7, in operation S710, the electronic device 130 may receive data blank information (e.g., CRS blank information) from the serving cell 110. The data blank information may be received through RRC signaling or may be received through MAC-CE or DCI.

In operation S720, the electronic device 130 may identify a subframe in which the resource allocations overlap based on the timing offset. The electronic device 130 may identify an area where the resource allocations of the serving cell 110 and the neighboring cell 120 overlap based on the timing offset and the data blank information received from the serving cell 110. For example, the electronic device 130 may detect the timing difference or timing offset between the serving cell 110 and the neighboring cell 120. Thereafter, the electronic device 130 may identify in which subframe resource allocations overlap and in which subframe resource allocations do not overlap, based on the data blank information and the detected timing difference. For example, referring to FIG. 6A, based on the detected timing difference, the electronic device 130 may identify subframes in which resource allocations do not overlap (e.g., at least one CRS blank subframe) and subframes in which resource allocations overlap when the signal of serving cell 110 is received as late as the timing offset. For example, when the timing offset is less than one subframe, the electronic device 130 may identify that resource allocations overlap only in the last one of the 10 subframes that make up the subframe burst. For another example, when the timing offset is greater than one subframe and less than two subframes, the electronic device 130 may identify that resource allocations overlap in the last two subframes of the 10 subframes that make up the subframe burst. That is, the electronic device 130 may identify a subframe in which resource allocations overlap between the serving cell 110 and the neighboring cell 120 based on the size of the timing offset.

In operation S730, the electronic device 130 may increase a first weight of the first LLR corresponding to a subframe in which resource allocations do not overlap. The first weight may include a HARQ combining weight value indicating how much the first LLR is reflected when generating a new LLR. For example, referring to FIG. 6A, in the case of first to ninth subframes of the subframe burst (e.g., of the second frame) in which resource allocations do not overlap, inter-cell interference does not occur since there is no resource allocation of the neighboring cell 120. Therefore, to increase the ratio of reflecting the first LLR corresponding to the first to ninth subframes, the first weight corresponding to the first LLR may be increased.

In operation S740, the electronic device 130 may decrease a second weight of the second LLR corresponding to the subframe in which resource allocations overlap. The second weight may include a HARQ combining weight value indicating how much the second LLR is reflected when generating a new LLR. For example, referring to FIG. 6A, in the case of the tenth subframe of the subframe burst (e.g., of the second frame) in which resource allocations overlap, there is a resource allocation of the neighboring cell 120, resulting in inter-cell interference. Therefore, to lower the ratio reflecting the second LLR corresponding to the tenth subframe, the second weight corresponding to the second LLR may be decreased.

In operation S750, the electronic device 130 may calculate the third LLR based on the first LLR and the second LLR. The electronic device 130 may calculate an improved LLR using the data blank information. The improved LLR may correspond to the third LLR. The electronic device 130 may calculate the third LLR according to the equation below.

$$LLR_{combining} = Concatenate(w_{noBlank}LLR_{noBlank},\ w_{Blank}LLR_{Blank}),\ w_{noBlank} < w_{Blank} \qquad \text{[Equation 1]}$$

$LLR_{Blank}$ may include the first LLR corresponding to a subframe in which resource allocations do not overlap (e.g., the first to ninth subframes of the subframe burst in FIG. 6A) and $w_{Blank}$ may include the first weight for the first LLR. $LLR_{noBLank}$ may include the second LLR corresponding to a subframe in which resource allocations do overlap (e.g., the tenth subframe of the subframe burst in FIG. 6A) and $w_{noBlank}$ may include the second weight for the second LLR. $LLR_{combining}$ may include the third LLR corresponding to the improved LLR. Accordingly, the electronic device 130 may improve the decoding ability by setting the weight of the LLR higher in the area where resource allocations of the serving cell 110 and the neighboring cell 120 do not overlap based on the data blank information of the neighboring cell 120 signaled from the serving cell 110.

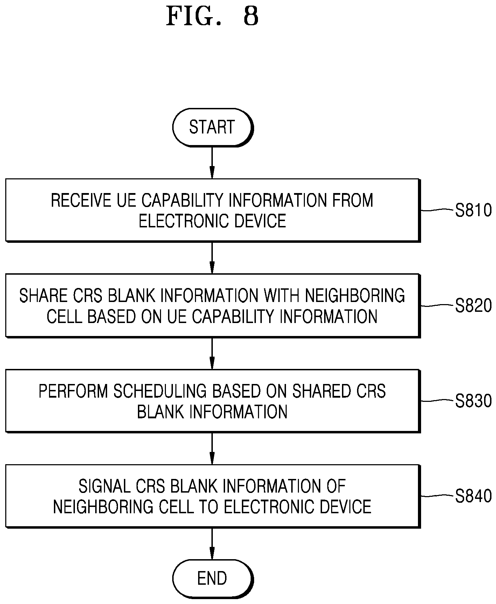

FIG. 8 is a flowchart of a method of operating the serving cell 110 according to embodiments.

Referring to FIG. 8, in operation S810, the serving cell 110 may receive UE capability information from the electronic device 130. The UE capability information may include TD (time domain) granularity information of the electronic device 130. The UE capability information may be as shown in Table 3 below.

[Table 3]

| crs-BlankTimeGranularitySubframe ENUMERATED {supported} |
| --- |

The TD granularity information may include either the subframe unit or the entire time domain. The TD granularity information may include either the subframe unit or the entire time domain depending on the timing difference compensation ability of the electronic device 130. For example, when the electronic device 130 is not capable of compensating the timing difference for the subframe unit, such as when the electronic device 130 operates at lower power, the TD granularity information may correspond to the entire time domain. For another example, when the electronic device 130 is capable of compensating the timing difference for the subframe unit, the TD granularity information may correspond to the subframe unit. However, the TD granularity information may not correspond to only one subframe or the entire time domain but may correspond to various numbers of subframes. According to embodiments, the UE capability information may include information about a time domain unit (e.g., the TD granularity information). The time domain unit may represent one of a subframe, a frame or a subframe burst.

In operation S820, the serving cell 110 may share the CRS blank information with the neighboring cell 120 based on the UE capability information. The CRS blank information may refer to information about an area where the neighboring cell 120 has not allocated resources for transmitting the CRS. According to embodiments, the serving cell 110 and the neighboring cell 120 may share the CRS blank information through the backhaul communication circuit 220 in FIG. 2. According to embodiments, the serving cell 110 and the neighboring cell 120 may share the CRS blank information based on a request/response process initiated by one or both among the serving cell 110 and the neighboring cell 120, but embodiments are not limited thereto. According to embodiments, one or both of the serving cell 110 and/or the neighboring cell 120 may provide the CRS blank information to the other among the serving cell 110 and/or the neighboring cell 120 periodically, in response to a trigger condition, or otherwise. The trigger condition may comprise an indication that interference and/or signal quality at the electronic device 130 is beyond a threshold. For example, the CRS blank information may include frequency domain information and time domain information and may be as shown in Table 4 below.

[Table 4]

```
CRS-BlankInfo ::= SEQUENCE
{
  SF-Bitmap CRS-BlankInfoTimeDomain OPTIONAL
  StartRB INTEGER (0..100)
  LengthRB INTEGER (0..100)
},

CRS-BlankInfoTimeDomain ::= CHOICE {
                SF-Bitmap5 BIT STRING (SIZE(5))
                SF-Bitmap10 BIT STRING (SIZE(10))
                SF-Bitmap20 BIT STRING (SIZE(20))
                SF-Bitmap40 BIT STRING (SIZE(40))
                SF-Bitmap80 BIT STRING (SIZE(80))
},
```

According to embodiments, the frequency domain information may include information about the location of the starting RB in the frequency domain and the length of the RB in the frequency domain for a blank area to which no resources are allocated. The CRS blank information may include the frequency domain information because it is inefficient to blank the entire RB area with the ABS subframe as shown in FIG. 4 as the system bandwidths of the TN cell and the NTN cell may be different. For example, when the TN cell serves 100 RBs and the NTN cell serves only 6 RBs, it may be more efficient in terms of resource utilization for the TN cell to blank only 6 RBs that overlap with the NTN cell.

According to embodiments, the time domain information may include information about a subframe bitmap in the time domain for a blank area to which no resources are allocated. The subframe bitmap may represent subframes to which the neighboring cell 120 does not allocate resources for a reference signal. According to embodiments, the CRS blank information may include the subframe bitmap (also referred to herein as subframe bitmap information) based on the time domain unit corresponding to the subframe.

In addition, according to embodiments, the time domain information may not include information about the subframe bitmap. That is, the electronic device 130 may have transmitted the UE capability information including the TD granularity information corresponding to the entire time domain to the serving cell 110 because timing difference is not compensated for the subframe unit. In this case, although the time domain information including the subframe bitmap informs the electronic device 130 of a specific subframe to which no resources are allocated, there is no need to specify the specific subframe because it is difficult for the electronic device 130 to adjust timing to the specific subframe. Therefore, when the UE capability information of the electronic device 130 includes the entire time domain, the time domain information may not include information about the subframe bitmap.

In operation S830, the serving cell 110 may perform scheduling based on the shared CRS blank information. The serving cell 110 may perform scheduling to allocate resources to subframes to which the neighboring cell 120 does not allocate resources based on the CRS blank information of the neighboring cell 120. For example, when the transmission timings of the neighboring cell 120 and the serving cell 110 are the same (or similar), resources may be allocated at different times, thereby preventing (or reducing) interference in advance. For another example, when the transmission timings of the neighboring cell 120 and the serving cell 110 are different, the serving cell 110 may perform scheduling to prevent (or reduce) CRS interference even though the timing offset is larger by setting a guard subframe for intervals in the CRS blank transition section.

In operation S840, the serving cell 110 may signal the CRS blank information of the neighboring cell 120 to the electronic device 130. For example, the serving cell 110 may provide the CRS blank information to the electronic device 130 through RRC signaling or may provide the CRS blank information to the electronic device 130 through MAC-CE or DCI. The CRS blank information provided by the serving cell 110 to the electronic device 130 may be as shown in Table 5 below.

[Table 5]

```
RadioResourceConfigDedicated ::=    SEQUENCE {
    srb-ToAddModList                SRB-ToAddModList        OPTIONAL,
    -- Cond HO-Conn
    drb-ToAddModList                DRB-ToAddModList        OPTIONAL,
    -- Cond HO-toEUTRA
    drb-ToReleaseList               DRB-ToReleaseList       OPTIONAL,
    -- Need ON
...

NeighCellsCrsBlank-Info ::= CHOICE {
  release NULL
  setup CRS-BlankInfoList


CRS-BlankInfoList ::= SEQUENCE (SIZE (1..maxCRS-Blank))OF CRS-BlankInfo

CRS-BlankInfo ::= SEQUENCE
{
  SF-Bitmap CRS-BlankInfoTimeDomain OPTIONAL
  StartRB INTEGER (0..100)
```

```
  LengthRB INTEGER (0..100)
},

CRS-BlankInfoTimeDomain ::= CHOICE {
                    SF-Bitmap5 BIT STRING (SIZE(5))
                    SF-Bitmap10 BIT STRING (SIZE(10))
                    SF-Bitmap20 BIT STRING (SIZE(20))
                    SF-Bitmap40 BIT STRING (SIZE(40))
                    SF-Bitmap80 BIT STRING (SIZE(80))
}

...
```

According to embodiments, the time domain information of the CRS blank information signaled to the electronic device 130 may be omitted. For example, when the TD granularity information of the UE capability information transmitted by the electronic device 130 to the serving cell 110 corresponds to the entire time domain, the serving cell 110 may explicitly indicate the time domain information as the entire time domain, or may implicitly inform the electronic device 130 of the time domain information as the entire time domain by signaling the CRS blank information that does not include the time domain information.

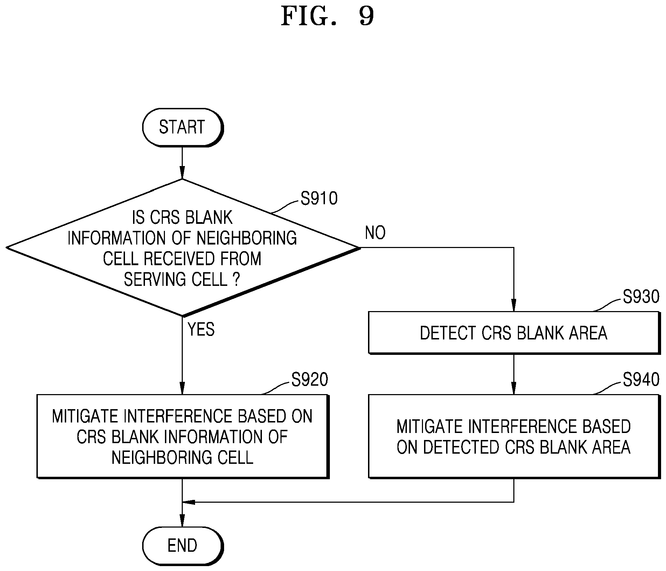

FIG. 9 is a flowchart of a method of operating the electronic device 130 according to embodiments.

Referring to FIG. 9, in operation S910, the electronic device 130 may determine whether the CRS blank information of the neighboring cell 120 has been received from the serving cell 110. The signaling of the CRS blank information depends on the serving cell 110 and the serving cell 110 may not signal the CRS blank information to the electronic device 130. When the CRS blank information is not obtained, the electronic device 130 may directly detect the blanked area and remove the interference according to the detection result. When obtaining the CRS blank information, the electronic device 130 may remove interference based on the CRS blank information.

In operation S920, the electronic device 130 may mitigate CRS interference based on the CRS blank information of the neighboring cell 120 (e.g., by performing operations at least similar to operations S720-S750 as discussed above).

The mitigating of interference may refer to the performance of various techniques to mitigate inter-cell interference, such as CRS interference cancellation (CRS-IC) and/or LLR scaling.

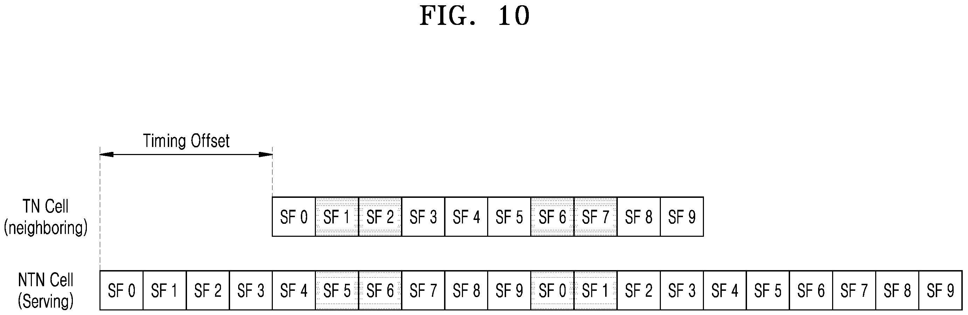

According to embodiments, the electronic device 130 may detect the timing offset between the neighboring cell 120 and the serving cell 110, and detect the CRS blank area based on the detected timing offset and the CRS blank information. For example, referring to FIG. 10, there may be a timing difference of as much as 4 subframes between the neighboring cell 120 and the serving cell 110. The transmission timing of the serving cell 110 may precede the transmission timing of the neighboring cell 120. That is, the size of the timing offset may be 4 subframes. In addition, the CRS blank information received by the electronic device 130 may include time domain information indicating the second, third, seventh, and eighth subframes. The electronic device 130 may identify the CRS blank area of the serving cell 110 based on the CRS blank information and the timing offset. The electronic device 130 may delay the neighboring cell 120 by 4 subframes and identify subframes of the serving cell 110 corresponding to the CRS blank information. For example, the electronic device 130 may identify that the serving cell 110 has allocated resources to the first, second, sixth, and seventh subframes.

According to embodiments, the electronic device 130 may perform the HARQ combining based on the improved LLR. For example, the electronic device 130 may set the weight of the LLR corresponding to the first, second, sixth, and seventh subframes identified as being allocated only the resources of the serving cell 110 higher and the electronic device 130 may set the LLR weight for the remaining subframes lower.

According to embodiments, the electronic device 130 may perform the HARQ combining using only LLRs corresponding to the blank area. For example, the electronic device 130 may perform the HARQ combining by using only the LLR corresponding to the first, second, sixth and seventh subframes identified as being allocated only the resources of the serving cell 110 and discarding the LLR for the remaining subframes (e.g., setting the weight to zero for the remaining subframes).

In operation S930, the electronic device 130 may detect the CRS blank area. Since the electronic device 130 did not receive the CRS blank information of the neighboring cell 120 from the serving cell 110, the electronic device 130 may not know in which subframe(s) the resources of the neighboring cell 120 are not allocated. Therefore, the electronic device 130 may determine whether there is a CRS of the neighboring cell 120 based on channel estimation. For example, the electronic device 130 may perform the channel estimation for each of the serving cell 110 and the neighboring cell 120. The electronic device 130 may acquire the channel power of the serving cell 110 and the channel power of the neighboring cell 120 based on the channel estimation. The electronic device 130 may determine whether to allocate resources of the neighboring cell 120 according to the equation below.

[Equation 2]

$$P_{\text{ITF}} < \gamma(P_{\text{SERV}})$$

$P_{\text{ITF}}$ may represent the channel power of the neighboring cell 120, $P_{\text{SERV}}$ may represent the channel power of the serving cell 110, and $\gamma$ may represent an adjustable threshold. When the channel power of the neighboring cell 120 and the channel power of the serving cell 110 satisfy the relationship of Equation 2, the electronic device 130 may determine that resources for the reference signal of the neighboring cell 120 are not allocated. When the channel power of the neighboring cell 120 and the channel power of the serving cell 110 do not satisfy the relationship of Equation 2, the electronic device 130 may determine that the resources of the neighboring cell 120 are allocated. According to embodiments the adjustable threshold may be a design parameter determined through empirical study.

According to embodiments, when the symbol boundaries of the neighboring cell 120 and the serving cell 110 do not match, the electronic device 130 may calculate the channel covariance of neighboring cell 120 based on DA-IW. The electronic device 130 may determine whether to allocate resources of the neighboring cell 120 based on the equation below.

[Equation 3]

$$R = E\{HH^{H}\}$$

In operation S940, the electronic device 130 may mitigate interference based on the detected CRS blank area (e.g., by performing operations at least similar to operations S720-S750 as discussed above). The mitigating of interference may refer to the performance of various techniques to mitigate inter-cell interference, such as CRS-IC and LLR scaling. According to embodiments, after mitigating the interference in operation S920 or S940 (or operation S750), the electronic device 130 may perform communication with the serving cell 110. For example, the electronic device 130 may generate a first signal (e.g., using the control circuit 330), process the first signal to perform one or more among modulating, upconverting, filtering, amplifying and/or encrypting on the first signal (e.g., using the communication circuit 310), and transmit the processed first signal to the serving cell 110 via one or more antennas of the electronic device 130. Additionally or alternatively, the electronic device 130 may receive a second signal from the serving cell 110 via the one or more antennas of the electronic device 130, process the second signal to perform one or more among demodulating, downconverting, filtering, amplifying and/or decrypting on the second signal (e.g., using the communication circuit 310), and perform a further operation(s) based on the processed second signal (e.g., using the control circuit 330). For example, the further operation(s) may include one or more of providing the processed second signal to a corresponding application executing on the electronic device 130, storing the processed second signal, sending a response signal to the serving cell 110 (e.g., based on a processing result of the corresponding application executing on the electronic device 130), etc.

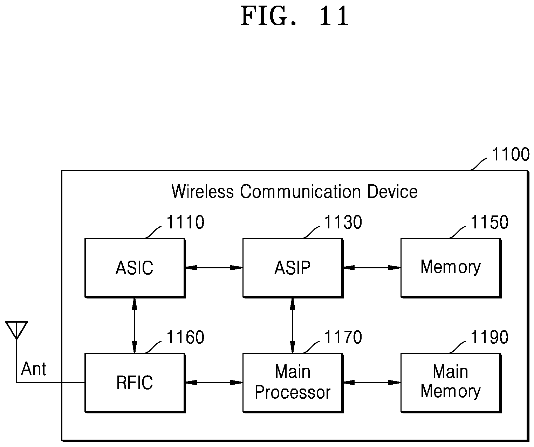

FIG. 11 is a block diagram of a wireless communication device according to embodiments.

Referring to FIG. 11, a wireless communication device 1100 may include a modem (not shown) and a radio frequency integrated circuit (RFIC) 1160, wherein the modem may include an application specific integrated circuit (ASIC) 1110, an application specific instruction set processor (ASIP) 1130, memory 1150, a main processor 1170, and/or main memory 1190. The wireless communication device 1100 of FIG. 11 may include a wireless communication device 10 according to embodiments.

The RFIC 1160 connected to an antenna Ant may receive signals from or transmit signals to the outside using a wireless communication network. The ASIP 1130, as an integrated circuit customized for a specific purpose, may support a dedicated instruction set for a specific application and execute instructions included in the instruction set. The memory 1150 may communicate with the ASIP 1130 and, as a non-transitory storage device, may store multiple instructions executed by the ASIP 1130. For example, the memory 1150, which is a non-limiting example, may include any type of memory accessible by the ASIP 1130, such as, but not limited to, random-access memory (RAM), read-only memory (ROM), tape, magnetic disk, optical disk, volatile memory, non-volatile memory, and combinations thereof.

The main processor 1170 may control the wireless communication device 1100 by executing the multiple instructions. For example, the main processor 1170 may control the ASIC 1110 and/or the ASIP 1130, process data received through the wireless communication network, and/or process user input to the wireless communication device 1100.

The main memory 1190 may communicate with the main processor 1170 and, as a non-transitory storage device, may store the multiple instructions executed by the main processor 1170. For example, the main memory 1190 may include any type of memory accessible by the main processor 1170, such as, but not limited to, RAM, ROM, tape, magnetic disk, optical disk, volatile memory, non-volatile memory, and combinations thereof.

Conventional devices and methods for performing communication via a non-terrestrial network attempt to reduce inter-cell interference using various interference cancellation techniques such as an inter-cell interference coordination (ICIC) technique, an enhanced ICIC (eICIC) technique and a further eICIC (FeICIC) technique. However, the conventional devices and methods are unable to apply these techniques with sufficient efficacy due at least to the relative differences in propagation delay between the non-terrestrial network cells and the terrestrial network cells. Accordingly, the conventional devices and methods suffer from excessive inter-cell interference.

However, according to embodiments, improved devices and methods are provided for performing communication via a non-terrestrial network. For example, the improved devices and methods may utilize data blank information and/or timing offset information of the non-terrestrial network cell and the terrestrial network cell to mitigate inter-cell interference (e.g., by scheduling and/or performing communication via the non-terrestrial network using time/frequency resources different from those used by the terrestrial network cell). Accordingly, the improved devices and methods overcome the deficiencies of the conventional devices and methods to reduce inter-cell interference.

According to embodiments, operations described herein as being performed by the wireless communication system 10, the serving cell 110, the neighboring cell 120, the electronic device 130, the base station 200, the wireless communication circuit 210, the backhaul communication circuit 220, the control circuit 240, the electronic device 300, the communication circuit 310, the control circuit 330, the interference control circuit 335, the wireless communication device 1100, the RFIC 1160, the ASIC 1110, the ASIP 1130 and/or the main processor 1170 may be performed by processing circuitry. The term 'processing circuitry,' as used in the present disclosure, may refer to, for example, hardware including logic circuits; a hardware/software combination such as a processor executing software; or a combination thereof. For example, the processing circuitry more specifically may include, but is not limited to, a central processing unit (CPU), an arithmetic logic unit (ALU), a graphics processing unit (GPU), a digital signal processor, a microcomputer, a field programmable gate array (FPGA), a System-on-Chip (SoC), a programmable logic unit, a microprocessor, application-specific integrated circuit (ASIC), etc.

The various operations of methods described above may be performed by any suitable device capable of performing the operations, such as the processing circuitry discussed above. For example, as discussed above, the operations of methods described above may be performed by various hardware and/or software implemented in some form of hardware (e.g., processor, ASIC, etc.).

The software may comprise an ordered listing of executable instructions for implementing logical functions, and may be embodied in any "processor-readable medium" for use by or in connection with an instruction execution system, apparatus, or device, such as a single or multiple-core processor or processor-containing system.

The blocks or operations of a method or algorithm, and/or functions, described in connection with embodiments disclosed herein may be embodied directly in hardware, in a software module executed by a processor, or in a combination of the two. If implemented in software, the functions may be stored on or transmitted over as one or more instructions or code on a tangible, non-transitory computer-readable medium (e.g., the memory 230, the memory 320, the memory 1150 and/or the main memory 1190). A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD ROM, or any other form of storage medium known in the art.

Embodiments may be described with reference to acts and symbolic representations of operations (e.g., in the form of flow charts, flow diagrams, data flow diagrams, structure diagrams, block diagrams, etc.) that may be implemented in conjunction with units and/or devices discussed in more detail herein. Although discussed in a particular manner, a function or operation specified in a specific block may be performed differently from the flow specified in a flowchart, flow diagram, etc. For example, functions or operations illustrated as being performed serially in two consecutive blocks may actually be performed concurrently, simultaneously, contemporaneously, or in some cases be performed in reverse order.

Although terms of "first" or "second" may be used to explain various components, the components are not limited to the terms. These terms should be used only to distinguish one component from another component. For example, a "first" component may be referred to as a "second" component, or similarly, and the "second" component may be referred to as the "first" component. Expressions such as "at least one of" when preceding a list of elements, modify the entire list of elements and do not modify the individual elements of the list. For example, the expression, "at least one of a, b, and c," should be understood as including only a, only b, only c, both a and b, both a and c, both b and c, all of a, b, and c, or any variations of the aforementioned examples. As used herein the term "and/or" includes any and all combinations of one or more of the associated listed items.

Any of the arrows or lines that interconnect the components in the drawings may represent physical data paths, logical data paths, or both. A physical data path may comprise a data bus or a transmission line, for example. A logical data path may represent a communication or data message between software programs, software modules, Subroutines, or other software constituents or components.

While the inventive concepts have been particularly shown and described with reference to embodiments thereof, it will be understood that various changes in form and details may be made therein without departing from the scope of the following claims.

## Claims

1. A method of operating an electronic device, the method comprising:

   receiving data blank information from a serving cell;
   identifying at least one first subframe and at least one second subframe based on a timing offset and the data blank information, resource allocations between the serving cell and an interference cell overlapping in the at least one first subframe, and the resource allocations not overlapping in the at least one second subframe;
   increasing a first weight for a first log likelihood ratio (LLR) corresponding to the at least one first subframe;
   decreasing a second weight for a second LLR corresponding to the at least one second subframe; and
   calculating a third LLR based on the first LLR and the second LLR.

2. The method of claim 1, wherein

   the serving cell corresponds to a non-terrestrial network (NTN) cell; and
   the interference cell corresponds to a terrestrial network (TN) cell.

3. The method of any preceding claim, wherein
   the data blank information is shared between the serving cell and the interference cell based on backhaul communication.

4. The method of any preceding claim, wherein
   a downlink channel transmitted from the serving cell to the electronic device is scheduled in an area indicated by the data blank information.

5. The method of any of claims 1 to 3, wherein the data blank information comprises information on an area of a downlink channel transmitted by the interference cell, resources not being allocated in the area of the downlink channel.

6. The method of any of claims 1 to 5, wherein the data blank information comprises:

   time domain information indicating a subframe burst to which the interference cell has not allocated resources in a time domain; and
   frequency domain information indicating:

   a location of a starting resource block (RB), and
   a length of an RB of an area to which the interference cell has not allocated resources in a frequency domain.

7. The method of any preceding claim, wherein the receiving of the data blank information is based on radio resource control (RRC) signaling, a downlink control indicator (DCI) or a media access control (MAC) control element (MAC-CE).

8. A method of operating an electronic device, the method comprising:

   transmitting user equipment (UE) capability information to a serving cell;
   receiving cell specific reference signal (CRS) blank information for an interference cell from the serving cell;
   detecting a timing difference between the serving cell and the interference cell;
   identifying a CRS blank subframe based on the timing difference and the CRS blank information; and
   mitigating interference based on the CRS blank subframe.

9. The method of claim 8, wherein

   the serving cell corresponds to a non-terrestrial network (NTN) cell; and
   the interference cell corresponds to a terrestrial network (TN) cell.

10. The method of claim 8 or 9, wherein
    the CRS blank information is shared between the serving cell and the interference cell based on backhaul communication.

11. The method of any of claims 8 to 10, wherein
    a CRS transmitted from the serving cell to the electronic device is scheduled in an area indicated by the CRS blank information.

12. The method of any of claims 8 to 11, wherein the UE capability information comprises information about a time domain unit, the time domain unit representing one of a subframe, a frame or a subframe burst.

13. The method of claim 12, wherein the CRS blank information comprises subframe bitmap information indicating at least one subframe to which no resources are allocated based on the time domain unit corresponding to the subframe.

14. The method of any of claims 8 to 13, wherein the receiving of the CRS blank information is based on radio resource control (RRC) signaling, a downlink control indicator (DCI) or a media access control (MAC) control element (MAC-CE).

15. The method of any of claims 8 to 14, wherein the CRS blank information comprises:

    time domain information indicating a subframe to which the interference cell has not allocated CRS resources in a time domain; and
    frequency domain information indicating a resource block (RB) in an area to which the interference cell has not allocated CRS resources in a frequency domain.

# FIG. 1A

# FIG. 1B

# FIG. 2

200

| 220 | 240 | 210 |
|---|---|---|
| BACKHAUL COMMUNICATION CIRCUIT | CONTROL CIRCUIT | WIRELESS COMMUNICATION CIRCUIT |

230

MEMORY

# FIG. 3

FIG. 4

# FIG. 5

START

SHARE DATA BLANK INFORMATION WITH NEIGHBORING CELL — S510

IS TIMING DIFFERENCE WITH NEIGHBORING CELL IDENTIFIED ? — S520

NO

YES

PERFORM SCHEDULING EXCLUDING BLANK TRANSITION SECTION IDENTIFIED BASED ON TIMING DIFFERENCE — S530

PERFORM SCHEDULING BASED ON SHARED DATA BLANK INFORMATION — S540

SIGNAL DATA BLANK INFORMATION OF NEIGHBORING CELL TO ELECTRONIC DEVICE — S550

END

# FIG. 6A

# FIG. 6B

TN Cell (neighboring)

NTN Cell (Serving)

1 Frame

1 Frame

ABS ABS ABS ... ABS ABS ABS ABS

Timing Offset

620

EP 4 607 826 A2

# FIG. 7

START

RECEIVE DATA BLANK INFORMATION FROM SERVING CELL —— S710

IDENTIFY SUBFRAME IN WHICH RESOURCE ALLOCATIONS OVERLAP BASED ON TIMING OFFSET —— S720

INCREASE FIRST WEIGHT OF FIRST LLR CORRESPONDING TO SUBFRAME IN WHICH RESOURCE ALLOCATIONS DO NOT OVERLAP —— S730

DECREASE SECOND WEIGHT OF SECOND LLR CORRESPONDING TO SUBFRAME IN WHICH RESOURCE ALLOCATIONS OVERLAP —— S740

CALCULATE THIRD LLR BASED ON FIRST LLR AND SECOND LLR —— S750

END

# FIG. 8

START

RECEIVE UE CAPABILITY INFORMATION FROM ELECTRONIC DEVICE ——S810

SHARE CRS BLANK INFORMATION WITH NEIGHBORING CELL BASED ON UE CAPABILITY INFORMATION ——S820

PERFORM SCHEDULING BASED ON SHARED CRS BLANK INFORMATION ——S830

SIGNAL CRS BLANK INFORMATION OF NEIGHBORING CELL TO ELECTRONIC DEVICE ——S840

END

# FIG. 9

START

IS CRS BLANK INFORMATION OF NEIGHBORING CELL RECEIVED FROM SERVING CELL ? — S910

NO

DETECT CRS BLANK AREA — S930

YES

MITIGATE INTERFERENCE BASED ON CRS BLANK INFORMATION OF NEIGHBORING CELL — S920

MITIGATE INTERFERENCE BASED ON DETECTED CRS BLANK AREA — S940

END

FIG. 10

# FIG. 11